Europäisches Patentamt

(19) European Patent Office

Office européen des brevets

(11) Publication number: **0 019 037**
**B1**

(12) **EUROPEAN PATENT SPECIFICATION**

(45) Date of publication of patent specification: **21.09.83**

(51) Int. Cl.³: **H 01 M 10/39,**
**C 03 C 3/14, C 03 C 3/30**

(21) Application number: **80100771.7**

(22) Date of filing: **14.02.80**

(54) Improved tubesheet and tubesheet/hollow fibre assembly for high-temperature battery cells, and method of manufacturing same.

(30) Priority: **16.02.79 US 12637**
**18.07.79 US 58706**

(43) Date of publication of application:
**26.11.80 Bulletin 80/24**

(45) Publication of the grant of the patent:
**21.09.83 Bulletin 83/38**

(84) Designated Contracting States:
**BE DE FR GB IT NL**

(56) References cited:
**FR - A - 2 318 841**
**US - A - 3 679 480**
**US - A - 3 959 020**
**US - A - 3 985 576**

(73) Proprietor: **THE DOW CHEMICAL COMPANY**
**Dow Center 2030 Abbott Road Post Office Box 1967**
**Midland Michigan 48640 (US)**

(72) Inventor: **Anand, Joginder Nath**
**30 Mountaire Place**
**Clayton, Contra Costa, CA (US)**
Inventor: **Revak, Timothy Theodore**
**2884 Foskett Avenue**
**Concord, Contra Costa, CA (US)**
Inventor: **Tsang, Floris Yung**
**342 Mangrove Way**
**Walnut Creek, Contra Costa, CA (US)**
Inventor: **Levine, Charles Arthur**
**5869 Pine Hollow Road**
**Clayton, Contra Costa, CA (US)**

(74) Representative: **Weickmann, Heinrich, Dipl.-Ing. et al,**
**Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska**
**Möhlstrasse 22**
**D-8000 München 86 (DE)**

Courier Press, Leamington Spa, England.

# Improved tubesheet and tubesheet/hollow fibre assembly for high-temperature battery cells, and method of manufacturing same

High temperature battery cells—most notably sodium/sulfur battery cells—in which the electrolyte/separator takes the form of a plurality of cation-permeable hollow fibers or tubules, are now well known. See, for example, US—A—3,476,062; 3,672,995; 3,679,480; 3,703,412; 3,749,603; 3,765,944; 3,791,868; 3,829,331; 3,917,490 and 4,050,915.

In a typical Na/S battery cell, the electrolyte/separator takes the form of a plurality of generally parallel, $Na^+$ ion-permeable tubules or hollow fibers, each fiber being open at one end and closed at the other end. The open ends terminate in the upper surface of a horizontal, disc-like "tubesheet" or wall member, through which the fibers pass in sealing engagement and from the lower surface of which the fibers depend as closed-ended portions.

It is a difficult problem to devise or find a specific tubesheet material which is suitable for use with a given specific fiber material under a particular set of conditions. To be suitable for such use, the candidate material must meet each of some seven different requirements. In a sodium/sulfur battery cell, for instance, the tubesheet material must be inert to (not detrimentally reactive to an intolerable extent with) both sodium and sulfur/sodium polysulfide mixtures, at temperatures of up to at least 325°C. It must also be electronically nonconducting. Further, the candidate material must be reducible to a finely ground powder which, in turn, can be slurried with a readily evaporated or decomposed liquid vehicle to form a viscous, yet extrudeable, paste. In addition, the powder residue left after the vehicle has been removed must have enough coherence to maintain the shape that was imposed on the slurry. The powder must also be fusible, to form a rigid, fluid-tight wall member sealingly bonded to the fibers, at a temperature such that the fibers do not become appreciably distorted in the length of time required to effect the fusion. Finally, the thermal coefficients of expansion of the fiber and tubesheet materials must substantially match, at least over the range of temperatures at which the cells are made, stored and used.

It has now been recognized that still another requirement must be met, if breakage of fibers in tubesheet/fiber assemblies is to be minimized. That is, the tubesheet material should not "flux" the fibers in such manner or to such an extent that they are markedly weakened where they emerge from the tubesheet.

The most satisfactory combination of fiber and tubesheet materials previously found for use in high temperature (Na/S) battery cells was that in which the fibers have compositions essentially as disclosed in US—A—3,829,331 and 4,050,915 and the tubesheet composition is essentially that disclosed in US—A— Patent 3,917,490. Typical such fiber and tubesheet compositions are:

Fibers: $Na_2O, 2B_2O_3, 0.16\ NaCl, 0.2\ SiO_2$
Tubesheet: $Na_2O, 13,88\ B_2O_3$.

A number of reasonably long-lived sodium sulfur cells have been made with the foregoing materials. However, cells of this type often fail prematurely and the apparent cause of failure frequently is breakage of some of the fibers where they emerge from the tubesheet. It is believed that the fibers are embrittled and/or weakened by a fluxing action of the molten tubesheet material during the fusion step. Of course, weakening of the fibers in the foregoing manner also greatly increases the susceptibility of the fibers to breakage during cell assembly. When an alternative, otherwise suitable, tubesheet material ($Na_2O,\ 18.80\ B_2O_3$) was employed, similar results were experienced, i.e., the fluxing problem was not solved. Thus, a need for a tubesheet material which meets all of the other requirements listed above, but which does not so severely flux the fibers, is apparent.

The sodium borate tubesheet glasses previously used are soft and quite difficult to adequately grind. The use of special grinding agents and techniques (see the cited US—A—3,917,490 is required. An easier-to-grind tubesheet material is also highly desirable.

Sodium borosilicate glasses of widely varying proportions of sodium, silicon and boron oxides are well known. However, such glasses are not obvious candidate tubesheet materials. The addition of $SiO_2$ to the sodium borate tubesheet materials might improve their grindability but also would tend to make them more nearly resemble the fiber composition—thereby perhaps increasing, rather than decreasing the tendency for fluxing to occur.

It is also highly important, in handling tubesheet/hollow fiber assemblies, to avoid breaking off even one of the fibers, which are exceedingly small and fragile. It was conceived that the breakage tendency could be reduced if the flexure of the fiber, where it emerges from the bottom of the tubesheet, could be made less abrupt, i.e., could be distributed over a portion of the fiber length, rather than concentrated at the point of emergence. An ideal—but difficult to attain—improvement would be to have each fiber emerge from its own "well" (in the lower tubesheet surface) having the general shape of a trumpet bell. However, a further consideration is that a fluxing action of the tubesheet material on the fiber walls during densification (fusing) of the tubesheet apparently augments the tendency of the pendant fiber portions to break off, and this would not be eliminated by the latter improvement.

A modification which would appear to approach the ideal shape of the lower tube- sheet surface and also to move the zone of fiber weakening up into the tubesheet body (where it is of much less concern) is to minimize the degree of contact between the fiber walls and a bottom portion (layer) of the tubesheet material. This might be done by utilizing a more open internal tubesheet structure. However, maintaining the essential impermeability of the tubesheet and sealingly engaging it with the fibers then become serious problems.

Accordingly, the invention provides an improved tubesheet material which not only meets all the known requirements for hollow fiber type, high temperature battery cells but also has a considerably less deleterious effect on the resistance of the fibers to breakage.

The invention also provides an improved tubesheet/fiber assembly comprising a wall member composed of the latter material.

The invention further provides a tubesheet material which is more easily ground but also has a lower softening temperature.

Additionally, the fiber breakage experienced in assembling and operating hollow fiber type, high temperature battery cells, is considerably reduced with the tubesheet of the present invention.

The present invention also provides a high temperature, hollow fiber type battery cell in which the fibers have a reduced tendency to break off where they emerge from the tubesheet.

The present invention also resides in an improved tubesheet/hollow fiber assembly whereby the tendency of the fibers to break off is reduced but the essential impermeability of the assembly is retained. More specifically, the invention provides for a relatively simple, straight forward and easily controlled process for fabricating the improved assembly. As a corollary, the present invention reduces the necessity for plugging, or otherwise remedying, broken fiber ends in completed tubesheet/fiber assemblies.

The foregoing improvement in tubesheet/-fiber assemblies are achieved without departing from the use of tubesheet materials already proven to be suitable (as to coefficient of expansion match with the fibers, strength, melting point, etc.).

It has now been found that the foregoing improvements can be attained with tubesheet/hollow fiber assemblies in which the tubesheet is composed of sodium borate glass compositions containing up to 7.5 mole % of $SiO_2$ and the fibers are of a ceramic material compatible with the tubesheet glass.

The present invention may be more particularly defined as:

a tubesheet for use in a high temperature hollow fiber battery cell characterized by a glass having the composition

$Na_2O$, from 1 to 6.1 mole %;

$SiO_2$, from 2.5 to 7.5 mole %; and
$B_2O_3$, from about 86.5 to about 96.5 mole %.

The present invention may also be defined as:

a tubesheet/hollow fiber assembly for use in a high temperature battery cell comprising a tubesheet with which a plurality of hollow fiber lengths passing therethrough are engaged, characterized in that

said tubesheet being composed of a glass having the following composition

$Na_2O$, from 1 to 6.1 mole percent;
$SiO_2$, from 2.5 to 7.5 mole percent; and
$B_2O_3$, from 86.5 to 96.5 mole percent; and

said fibers being composed of a ceramic having the composition

$Na_2O$ 25—34 mole percent;
$B_2O_3$ 50—66 mole percent;
$SiO_2$ 0—11 mole percent;
NaCl 0—6 mole percent;

said tubesheet is a unitary body of said glass and is sealingly engaged with said fibers.

Preferably the fibers have a distortion temperature higher than the fusion temperature of said glass,

a thermal coefficient of expansion which—within the range from 25°C up to its transition temperature—does not differ from that of said glass by more than $10 \times 10^{-7}$ units/°C, and is capable of sealingly bonding with said glass at said fusion temperature without being fluxed by the glass to such an extent that the flex strength of said fibers is reduced by more than 50%.

It has also been discovered that the internal structure of the tubesheet can be modified so that it has a closed (helium-tight) upper surface but the underlying structure is more open or porous. This is done by "broiling" the uppermost layer of a tubesheet-to-be which consists essentially of sintered (edge and/or point-bonded) particles. Subject of the present invention therefore is also a helium-tight tubesheet/fiber assembly for use in an alkali metal/chalcogen battery cell, said assembly comprising a ceramic tubesheet which has first and second opposed faces characterized in that said tubesheet comprises a glass having the following composition

$Na_2O$ from 1 to 6.1 mole percent;
$SiO_2$, from 2.5 to 7.5 mole percent; and
$B_2O_3$, from 86.5 to 96.5 mole percent;

a plurality of inorganic hollow fibers extending through the tube-sheet and having closed-ended sections extending from said first face and open ends terminating in or beyond said second face,

the portion of said tubesheet subjacent to and defining said second face being non-porous and sealingly engaged with the fibers,

the remainder of the tubesheet being contiguous with said portion but not itself sealingly engaged with the fibers, and consisting essentially of sintered particles having the same chemical composition as said portion.

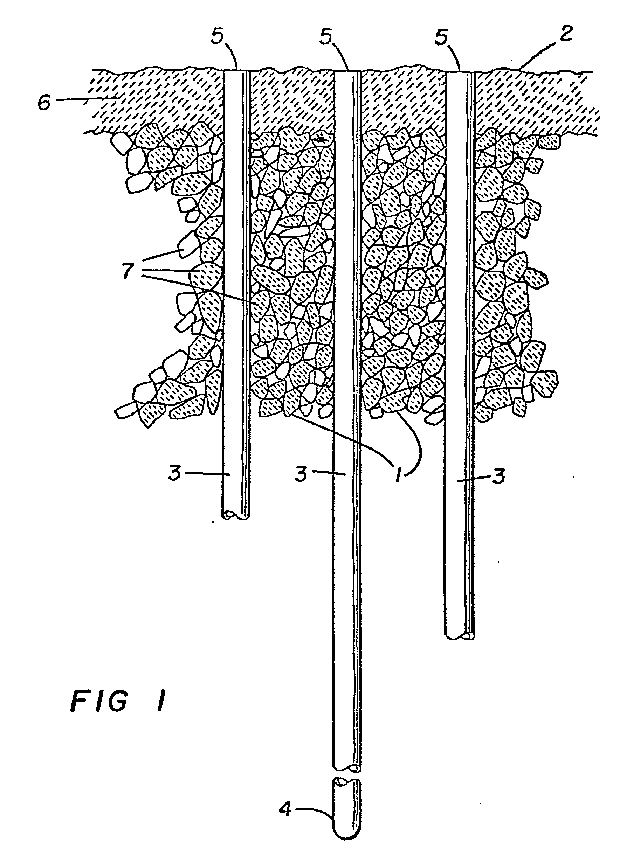

The structure of a tubesheet/hollow fiber assembly is more clearly depicted in Figure 1 of the drawing as a considerably enlarged, vertical cross-section of a portion of the assembly.

A ceramic tubesheet (not numbered) has first and second generally opposed faces (1 and 2, respectively) pierced by a plurality of hollow fibers (3) having closed ends (4) depending from the lower surface (1) of the tubesheet and open ends (5) terminating in the upper surface (2). The latter surface is defined by a fused, impervious upper layer (6) of the tubesheet material and the lower surface is defined by the lowermost of a body of edge- and point-bonded particles (7), of the same material, which make up the rest of the tubesheet.

It should be noted that the foregoing definition is not limited to fluid-impermeable or ion-permeable fibers or to assemblies in which the tubesheet (or wall member) has been "cured" or "fired".

The present invention also provides a process for making a helium-tight tubesheet/-hollow fiber assembly comprising the steps of (a) providing a self-supporting, sintered, ceramic particle mass which has two opposed surfaces and which is pierced by and adhered to a plurality of inorganic hollow fibers, the closed-ended sections of said fibers extending from one of said surfaces and the open ends of said fibers terminate in or beyond said other surface, characterized in that the particles constituting said mass are selected from a material which (1) has a coefficient of thermal expansion not differing from the coefficient for the fiber material by more than $20 \times 10^{-7}$ per °C; (2) is fusible at a temperature below the softening point of the fibers, to a melt capable of bonding with them, and (3) has a sufficiently low thermal conductivity so that the portion of said mass subjacent to and defining said other surface can be locally heated to said temperature and melting without causing the rest of said mass to lose its sintered, particulate structure, (b) heating to said temperature said portion of the mass, and (c) cooling the so-heated mass to solidify the resulting layer of molten ceramic. Preferably the sintered particle mass is provided by (1) slurrying the said ceramic particles with a volatile organic solvent to form a paste capable of maintaining the shape of a disc when formed as such, (2) disposing said slurry as a disc-shaped body of paste, pierced by said fibers, (3) evaporating said solvent from said body, and (4) heating the solvent-depleted body at a temperature below the softening point of said fibers for a period of time such that said particles are converted to said sintered particle mass. The portion of the mass subjacent to and defining the second surface is melted preferably by heat radiated directly to it from a graphite disc heated to redness.

Certain of the terms employed in the description are defined as follows:

The tubesheet (wall member) may consist, at one extreme, of discrete particles of the tubesheet glass cohered by secondary bonding forces and mechanical interlocking. At the other extreme, it may be a monolithic body of the glass, formed by particle fusion (or otherwise). Between these extremes, the particles may be fused to each other at edges and points, as by sintering, or may be held together by a minor amount of a cement or adhesive which can be removed prior to the fusion step.

The term "engaged" applies to any interaction between the fibers and the tubesheet which resists motion of the fibers relative to the tubesheet (or vice versa).

"Inorganic hollow fiber"—a capillary tubule having an outer diameter of less than 6500 microns and consisting of an inorganic material. Intended to include graphite, ceramics or any other such high-melting material having a comparably low heat conductivity. For the purposes of the present application, such fibers are considered fragile if they have the character of ordinary glass, that is, if they cannot be sharply flexed without breaking. In the tubesheet/fiber assembly adapted for use in an alkali metal/chalcogen battery cell the fibers are preferably composed of an alkali metal cation-conductive ceramic and the tubesheet is electronically non-conductive.

A preferred assembly of the present invention is one in which the recited tubesheet is the only tubesheet comprised in the assembly. However, the invention is not limited to single tubesheet assemblies. That is, the closed ended sections of the fibers may penetrate into or pass through a second tubesheet which is spaced apart from the first and is not necessarily sealingly engaged with the fibers or otherwise identical to the first tubesheet. When the fibers terminate within the second tubesheet, their ends therein may be "closed" by forming a helium-tight seal between them and the surrounding tubesheet material. If the closed ends of the fibers extend beyond the second tubesheet, they may later be cut off to adapt the assembly for a use which requires the portions of the fibers between the tubesheets to be unbroken and at least the first tubesheet to be helium-tight.

The specified "hollow fibers" are either linear or are generally U-shaped loops. If they are linear, they may have two open ends, each terminating at or adjacent to the outer face of a different one of two spaced-apart tubesheets, or may have one open end terminating in or adjacent to the outer face of one tubesheet and closed ended portions extending from the inner face thereof. If the fiber lengths are looped, both of their open ends terminate at or adjacent to the outer face of the same tubesheet. (The "inner" face of the tubesheet is that from which the fiber "bundle" depends or extends.)

The term "ceramic" is intended to mean any or all products made from earth by the agency of heat, such as glass, enamels, or cements.

The term "fluxed" means dissolution, leaching, or swelling of the fibers by the wall-member material or any exchange of ingredients therebetween.

The "flex-strength" of the fibers is the force which must be applied to break off a fiber clamped at one end and free to deflect at the other end, the force being applied at essentially a right angle to the fiber and at a specified distance from the point at which no deflection can occur.

"Non-porous"—having a closed surface, i.e., a tube-sheet surface which has no openings connected to channels through which a fluid may flow; intended to include closed-cell foam structures.

"Helium-tight"—having an internal structure such that less than $10^{-9}$ cc. of helium (measured at standard conditions) can diffuse through the tubesheet per second. It should be noted that the rate is an absolute rate and is not expressed in terms of volume of helium (per unit of time) per unit of area; the helium passes through the tubesheet only by way of leaks, at a rate independent of tubesheet area (diameter).

Tubesheet (wall-member) structure and composition

The tubesheet may consist essentially of particles (and thus have a porous structure), so long as those particles are sodium borosilicate particles having a composition which can be represented by the formula $Na_2O, xSiO_2, yB_2O_3$, wherein x and y have values consistent with the mole percent ranges set out in the preceding definition of the invention.

Preferably, the glass from which the tubesheet is formed has the composition:

$Na_2O$ 1.5—4.5 mole % ($\sim$1.9 most preferred)
$SiO_2$ 2.5—4.0 mole % ($\sim$2.9 most preferred)
$B_2O_3$ 92—96 mole % ($\sim$95.2 most preferred).

As presently contemplated, the utility of such porous wall members is as intermediate structures which can be converted to non-porous, i.e., fluid-tight, unitary tubesheets which are sealingly engaged with the fibers.

The sodium borosilicate particles may include dissolved incidental impurities and small amounts of other materials may be present within the interstices between the particles or on their surfaces. Those of the latter materials which are insoluble in the tubesheet glass are of less concern but those which are soluble may have a greater effect on the critical balance of properties which is essential to the functioning of the tubesheet material during, and after, the fusion step. Consequently, the total amount of soluble impurities which can be tolerated will usually not exceed a few tenths of a percent (by weight). Preferably, the content of materials other than the specified borosilicate glass is no more than about a tenth of a percent.

Slurry preparation

When the tubesheet is to be formed from a slurry, the solids to liquid ratio in the slurry should be as high as possible, in order to minimize the shrinkage achieved upon fusion of the liquid-free particles. This is done by adjusting the particle size distribution of the glass powder used, according to known principles of particle packing. Some of the powder particles must have effective diameters of less than 10 $\mu$m. (Preferably, most of the particles have diameters of less than 2 $\mu$m and at least 20% of them are less than 1 $\mu$m in diameter). From 40 to 60 parts by weight of the powdered glass is mixed with from 60 to 40 parts of −0,110 to +0,044 mm (−140 to +325 mesh) particles of the same (or a different) sodium borosilicate glass (as specified earlier herein). Preferably, the latter particles are at least generally spherical in shape, to improve the extrudeability of the slurried mixture.

If the preceding particle mixture is mixed in turn with from 7 to 14 parts by weight of a (volatilizeable) non-aqueous, liquid suspending vehicle, such as—for example—cumene, the resulting slurry is fluid enough to be readily extrudeable but viscid enough to hold the shape imposed on it until a complete tubesheet can be formed and "green cured" (free of volatiles).

The grinding method disclosed in the above-cited US—A—3,917,490 is quite suitable for the production of the sodium borosilicate glass powder employed in the practice of the present invention. However, considerably shorter grinding times are required for these glasses than for the sodium borate tubesheet glasses previously used (See Example 2, herein).

Fibers composition and preparation

The fibers employed in the present invention can consist of any otherwise suitable material which can be fabricated in hollow fiber form and meets the requirement set forth in the preceding definition. If the fibers are to be employed in a high temperature battery cell, they must also be substantially ion-permeable, at least at the normal working temperatures contemplated for that cell. When employed in alkali metal/chalcogen cells, the fibers should be sufficiently permeable to cations of the alkali metal that the overall, internal electrical resistance of the cell (at its normal operating temperature) is acceptably low, for the particular cell use contemplated.

The most important application of the present invention now known of is in sodium/sulfur battery cells. For this purpose, the fibers necessarily are permeable to $Na^+$ ions and should have the following properties: distortion temperature at least 340°C, thermal coefficient of expansion within the range of from 100 to $130 \times 10^{-7}$ units per °C and electrical ($Na^+$) conductivity of at least $5 \times 10^5$ ohm cm at a temperature of from 280 to 325°C.

The material used to make the fibers must be processable in some manner to form the fibers in the first place. The only known practicable method of fabricating ceramic hollow fibers (which typically are hairlike and fragile) is by melt spinning, essentially in the manner disclosed in the above cited US—A—4,050,915.

Materials having the compositions disclosed in the latter patent and the above cited US—A—3,829,331 are generally suitable for the preparation of hollow fibers to be employed in Na/S battery cells. The preferred materials for such fibers have the following composition:

Na$_2$O 25—34 mole %
B$_2$O$_3$ 50—66 mole %
SiO$_2$ 0—11 mole %
NaCl 0—6 mole %

A more preferred composition for the latter fibers is:

Na$_2$ 29.0—30.5 mole % (~29.8% most preferred)
B$_2$O$_3$ 58—60 mole % (~59.5% most preferred)
SiO$_2$ 5.5—6.5 mole % (~5.9% most preferred)
NaCl 4.5—5.5 mole % (~4.8% most preferred).

Because quite small amounts of impurities can markedly alter the ionic conductivity of the fiber material, the requirements in this regard for battery cell fibers are even more stringent than for the wall member material. In general, materials of the foregoing composition which include more than 0.5% by weight of impurities should not be used for the preparation of battery cell fibers; preferably, the impurities content is less than 0.1% by weight.

As will be apparent to those knowledgeable in the art, the requirements for fibers to be employed in types of devices other than battery cells will differ in some respect. Thus, if the fibers are to be employed, in a permeability separatory device, as a member resistant to high temperatures and/or corrosive materials, they need not be ion-conductive but will have to be selectively permeable to at least one of the materials to be separated. Similarly, fibers of the latter type (or microporous ceramic fibers) may be advantageously utilized for the introduction to a first fluid stream of a second fluid, as in sparging a gas into a liquid under severe conditions. (Ceramic (glass) fibers adapted to applications of the foregoing types are known; see, for example, Nimelnyk and H. B. Habgood, "Extraction of Helium From Natural Gas. The Diffusion Through Glass Process", Annual Meeting, Petrol. & Nat. Gas Division, Edmonton, May, 1960; *Canadian Mining & Metallurgical Bulletin* for October, 1961; Montreal, Canada, pp. 768—774.)

Selection of tubesheet and fiber material pairs

In selecting the wall member and fiber materials for a given application, it will generally be essential that the match between their thermal coefficients of expansion be such that the assembly can be cooled down, after the fusion step, without fibers breaking or cracks developing in the wall member. However, this does not necessarily require that as close a match as possible be attained. The maximum tolerable extent of mismatch for a given, specific application of course can be determined, by well known methods, without undue experimentation.

The following tabulation is indicative of the effect of compositional differences on the thermal coefficient of expansion for sodium borate/borosilicate glasses. (Softening points and glass transition temperatures are also given for some of the glasses.)

**TABLE I**
Effect of composition on thermal coefficient of expansion

| Glass | Composition mole %'s | | | | | | Coef. units/°C | Temp. range °C | Trans. temp. °C | Softening temp. °C |
|---|---|---|---|---|---|---|---|---|---|---|
| | Na$_2$O | B$_2$O$_3$ | SiO$_2$ | NaCl | NaF | MgF$_2$ | | | | |
| a | 0 | 100 | 0 | 0 | 0 | 0 | 153×10$^{-7}$ | | | |
| b | 0 | 95.2 | 5.8 | 0 | 0 | 0 | 134 | | | |
| c | 0 | 88.5 | 11.5 | 0 | 0 | 0 | 118 | | | |
| d | 1.9 | 95.2 | 2.9 | 0 | 0 | 0 | 116 | 0—130 | 250 | 325 |
| | | | | | | | 130 | 130—250 | | |
| e | 3.9 | 92.8 | 3.3 | 0 | 0 | 0 | 120 | 25—250 | 310 | 328 |
| f | 5.1 | 94.9 | 0 | 0 | 0 | 0 | 119 | | | 340 |
| g | 5.6 | 94.4 | 0 | 0 | 0 | 0 | 127 | | | |
| h | 6.7 | 93.3 | 0 | 0 | 0 | 0 | 111 | | | 350 |
| i | 11.1 | 88.9 | 0 | 0 | 0 | 0 | 100 | | | |
| j | 15.0 | 79.8 | 5.2 | 0 | 0 | 0 | 101 | | | |
| k | 16.6 | 83.4 | 0 | 0 | 0 | 0 | 83 | 0—130 | | |
| | | | | | | | 95 | 130—250 | | |
| l | 29.5 | 58.9 | 0 | 0 | 8.7 | 2.9 | 137 | 0—300 | | 492 |
| m | 29.8 | 59.5 | 5.9 | 4.8 | 0 | 0 | 124 | 0—300 | | |

The following examples are for purposes of illustration and are not to be construed as limiting the present invention.

Example 1: Glass preparation

A quantity of glass d (Table I) was prepared from $Na_2CO_3$ (2.99 parts by weight), $B_2O_3$ (95.76 parts) and $SiO_2$ (2.48 parts) by mixing the powdered ingredients in a rolling jar for about 1/2 hour, melting the resulting powder mixture, maintaining the melt at a temperature of ~1000°C for two hours while stirring it at intervals of about 40 minutes (average) and letting it solidify. This glass was found to have the properties given for it in Table I.

Example 2: Preparation of fiber/tubesheet assembly

A billet of glass e (Table I) was prepared in the manner of Example 1, broken up and "rough" ball milled. The −0,044 mm (−325 mesh) portion of the milled glass was screened out and ground (essentially in the manner disclosed in U.S. Patent 3,917,490) with 1.5 wt. % of n-decylamine in a ball mill, at 90°C, for 3 days. The resulting powder, when mixed with an equal weight of −0,110 to +0,044 mm (−140 to +325 mesh) spherical particles of the same composition as the powder and then with 10% by weight of cumene yielded a more easily extruded paste than is obtained with otherwise essentially identical mixtures, the glass powder component of which has been made by ball milling either of the prior art glasses f or h (Table I) in the same way for 7—10 days.

A quantity of hollow fiber, 50 $\mu$m I. D. by 80 $\mu$m O. D., was spun, essentially as described in US—A—4,050,915 from glass m (Table I). A tubesheet/fiber assembly of the type used in experimental 6 ampere hour Na/S battery cells was constructed in the manner described earlier herein, using about 3000, 10 cm lengths (closed at one end) of the fiber. When this assembly was heated for 4 hours at 372—3°C, the "green" tubesheet was "cured" to a unitary disc about 2 cm in diameter and 0.4 cm thick. The assembly was found (as described below) to be helium-tight and the fibers were found not to have been substantially weakened or embrittled. In contrast, otherwise essentially identical assemblies prepared from the prior art tubesheet glasses (f or h, Table I) must be fused ("cured") at temperatures in the range of from about 383—405°C in order to be made helium-tight and the fibers become quite brittle where they emerge from the lower surface of the tubesheet.

The method used to check the assembly for tubesheet cracks, broken fibers and/or imperfect fiber/tubesheet bonding is as follows. A commercial helium detector (A Varian, Model 925—40, mass spectograph unit which can detect helium flows as small as $10^{-9}$ cc (S.T.P.) per second) is connected to the stem of an inverted funnel which is sealingly engaged with the periphery of the tubesheet and helium gas is discharged just below the tubesheet, at about the center of the fiber bundle (which ordinarily is formed around a hollow mandrel which conveniently functions as a conduit for the helium). The helium flows radially outward between the fibers and across the lower face to the wall member. If the rate of helium flow through the detector is so low ($<10^{-9}$ cc/sec) as not to be detectable, the assembly is considered leak-free. (A typical helium flow when a leak results from imperfect bonding between the wall member and a single fiber is about $10^{-7}$ cc/second.)

Example 3: retention of fiber strength

The extent to which fibers of a specific size and composition are weakened when "potted" in a specific tubesheet glass can be determined (within statistically assessed confidence limits) by means of the following procedure—which should be carried out in a reproducible, controlled environment, such as is afforded by a dry box or dry room.

A 1 cm diameter hole is drilled through a 1.5 cm thick cylindrical test block of a material which does not soften at the glass cure temperature and has a thermal coefficient of expansion which is the same as or not more than $20 \times 10^{-7}$ units/°C greater than that of the glass. The block has a flat lower face (to which the axis of the hole is perpendicular) and is closely fitted in a flat-bottomed cylindrical cavity in a tapered TEFLON® stopper. A hole somewhat larger in diameter than the fiber to be tested is drilled through the stopper along the same axis as the hole in the test block. The stopper is tightly inserted in the mouth (a tapered, ground glass female joint) of a test tube having a side arm. A length of the fiber, having one end closed, is inserted in the test tube through the small hole until its closed end rests on the test tube bottom and the open end of the fiber extends above the upper surface of the test block. A source of vacuum is connected to the side arm of the test tube and the fiber portion in the test block is "potted" by filling the space around it (the hole in the block) with the same viscous paste of glass particles and liquid vehicle as is used in preparing tubesheet. (A syringe is convenient for the latter operation). An inverted funnel is fitted over the block and stopper assembly, sealingly engaged with the outer surface of the test tube (by means of a gasket) and connected to the same vacuum source as the side arm. The vacuum is gradually increased while the assembly is slowly warmed, to remove the liquid component of the paste. The potting material has now been "green cured". The vacuum source is disconnected and air allowed to bleed slowly into the assembly. The funnel is disengaged from the test tube and the test block and fiber carefully removed from the stopper and test tube.

The block, fiber and potting material are now heated in the same manner employed when preparing tubesheets from the glass, thereby "curing" the potting material (i.e., forming a unitary tubesheet sealingly engaged with the fiber). If desired, the bottom of the wall member can be examined with a microscope and/or the assembly tested for leaks as described in Example 2.

The block is clamped in a suitable jig with the closed-ended portion of the fiber extending down at an angle to the horizontal and tangentially contacting the bottom of an endless groove in the periphery of a small TEFLON® wheel spaced an arbitrary distance from the test block. The vertical position of the wheel is adjusted until the portion of the fiber between the block and the wheel appears to be essentially straight. The distance from the block to the wheel and the angle to the horizontal made by the fiber are measured. The wheel is then gradually raised, along a rectilinear or arced path, as appropriate, until the fiber breaks.

Another, essentially identical, length of the fiber is tested in the same way, except that the potting material used is a comparably viscous resin which is inert to the fiber material and is readily cured to a hard, inflexible material. The ratio of the first distance the wheel has to be moved to break the fiber to the second distance is taken as a measure of the extent to which the fiber retains its strength when the tubesheet glass is fused around it. Of course, a better indication of strength retention is obtained by testing several fiber lengths potted with the tubesheet glass (or the resin) but contacting the wheel at different initial distances from the test block, and plotting the respective ratios against the latter distances.

When the foregoing test is carried out on individual fibers which meet the requirements set forth earlier herein and are potted with tubesheet glasses having the composition specified herein, substantially better strength retention is observed, as compared to the same kind of fibers potted in the prior art glasses (glasses f and h, Table I, for example). By "substantially better" is meant consistently greater than 50% retention (usually greater than 70%), as compared to consistently less than 50% (usually less than 40%).

In a preferred embodiment of the foregoing process invention, the fiber-pierced, sintered ceramic particle mass is first formed as a "green cured", unsintered, shaped particle mass and then sintered at a temperature below the softening point of the fibers. The sintered mass is then treated to form a fused, impervious upper layer of the tubesheet.

Bake and broil of tubesheet/hollow fiber assembly

According to procedures presently employed, a green-cured disc is "fired" or cured by heating the assembly to degrade and/or remove the cement components and any remaining suspension medium and to fuse together the glass or ceramic particles in the disc to form a densified, unitary tubesheet member with which the fiber portions passing through it are bonded in sealing engagement. This is done by supporting the assembly at the tubesheet periphery in an open pyrex container, which in turn is fitted closely within a closed metal casing, connecting the casing to a vacuum pump and placing the casing (and contents) in a furnace. The disc is heated, essentially by irradiation from and through the pyrex container, to a temperature of about 340°C and kept at that temperature for about 2 hours. It is next further heated in the same manner, for about 4 hours at a final temperature which is about 15°C above the glass transition temperature of the tubesheet material but well below the softening temperature of the fiber material, and is then allowed to cool slowly. With a solder-glass type of tubesheet materials as disclosed in the above cited US—A—3,917,490, for example, the final temperature will range from 375°C to 400°C.

In order to modify the latter step to the practice of the present invention, the following requirements must be met.

A first requirement for a leak-free (helium tight) tubesheet and fiber assembly is an adequate match between the coefficients of thermal expansion of the fiber and tubesheet materials. As a general rule, said coefficients should not differ by more than $20 \times 10^{-7}$ units per °C. Additional requirements for a suitable tubesheet material are: (2) it can be formed as a coherent mass of particles which are sinterable at a temperature well below their glass transition temperature; (3) it can be melted at a temperature below the softening temperature of the fibers; (4) the resultant melt must bond with the fibers; and (5) the sintered particle mass (and fibers) must not conduct heat so efficiently as to render impractical the achievement of localized melting, i.e., melting of just the portion of the sintered mass subjacent to and defining the irradiated tubesheet fiber.

The first, third and fourth of the foregoing requirements are implied or specifically disclosed in the prior art. However, the second and fifth requirements are novel and a further object of the present invention.

The heating step in the foregoing procedure is modified, according to the present invention as follows. The assembly comprising the tubesheet and fibers is heated or "Baked" under reduced pressure at a temperature and for a time such that sintering occurs but substantial fusion does not result. Then the upper portion of the sintered particle mass is briefly seared or "broiled" at a temperature which is high enough to cause formation of a fused layer which will effect a tight seal with the fibers when it is allowed to solidify.

The sintering may be carried out in any appropriate fashion. One suitable method is simply to employ a low enough temperature in the second stage of heating so that substantial fusion does not occur. Preferably, however, the sintering is accomplished in a single-stage operation in which the assembly is heated (under diffusion pump vacuum, i.e., at 0,013 to 0,000013 Pa at the latter temperature for a sufficiently long time to ensure that the particles are well joined (edge or point bonded). Thus, the assembly comprising a conventional green-cured tubesheet consisting of particles of sodium borate-type solder glass (4.5 mole % $Na_2O$; 95.5 mole % $B_2O_3$ or 6 mole % $Na_2O$; 94 mole % $B_2O_3$, for example) is maintained at an appropriate temperature (345°C or 355°C, respectively) for four hours.

Of course, a finite time is required for the assembly to attain the set furnace temperature, but this is advantageous in that any remaining volatiles can be removed before the sintering temperature is reached, thereby avoiding any tendency for foaming to occur (where the material involved in particle bonding becomes relatively plastic).

The fusion step also can be carried out in any appropriate fashion. One method would be to supply the heat utilized in sintering the main portion of the tubesheet through a temperature gradient such that the uppermost portion would be at the required fusion temperature. However, this would be more difficult to control and the preferred method is to cool the sintered assembly and then place it in a suitable housing (such as a pyrex housing, for example), where a graphite disc of about the same diameter as the tubesheet and about 3.2 mm thick (for example) is positioned an appropriate distance (such as about 2 cm, for example) above it on and supported by an intervening, short, vertical VYCOR® sleeve. The entire assembly is heated to a temperature above the annealing point of the particles (350—360°C, for example) and maintained under nitrogen ($10^4$—$10^5$ Pa). A radio-frequency induction heating coil is placed around the housing at the level of the graphite disc and used to heat the disc to redness (~700°C). The heat radiated from the disc melts the adjacent surface layer of the tubesheet, which can be observed through the housing. When the depth and liquidity of the molten layer is judged (by experience) to be sufficient (after 3.5 minutes, for example), the heating is discontinued and the assembly allowed to cool.

Of course, when "broiling" is accomplished in this manner, the fibers usually will not extend substantially above the upper ("second") tubesheet surface and must not extend far enough above it to touch the carbon disk or otherwise detrimentally effect the procedure.

Presumably as a consequence of minute amounts of gas being trapped in the sintered precursor structure, some foaming occurs in the molten layer formed during the latter operation. However, this does not result in a porous structure (as defined earlier herein). That is, the upper layer of the finished tubesheet has the structure of a closed cell foam and is impervious. This is fortunate and somewhat surprising but the present invention of course is not limited to any particular fine structure of the upper layer. All that is necessary is that the layer be non-porous and sealingly engaged with the fibers.

It will be recognized that the above-described sintering and fusion ("broiling") steps can be carried out in the same housing and without opening it between the two operations. That is, the spacing sleeve may be supported other than by resting on the tubesheet periphery and the carbon disc introduced before sintering is commenced. After sintering, the induction coil is positioned around the housing and the broiling step is carried out "in situ". It will also be recognized that any other means for producing the radiant heat used to broil the upper tubesheet portion may be employed. That is, the broiling step is not limited to the use of an RF-heated carbon disc.

Example 4

A relatively large number of Na/S battery cells having a nominal rating of 6 ampere hours were made by the above-described prior art procedure before the "bake and broil" method was invented. A comparable number of otherwise essentially identical cells made by the modified procedure of the present invention were compared, as to "tightness" and operating lifetimes with the "prior art" cells. A much higher proportion of gas-tight cells was obtained using the "bake and broil" method of the present invention. Details as to cell components and testing procedures follow.

Each cell comprised a cylindrical, 316 stainless steel casing, 3,175 cm (1 1/4") in outer diameter by 21,59 cm (8 1/2") tall, the bottom of which was internally connected to the cathodic current collector (foil roll). The top of the casing was extended, off-center, by a length of stainless steel tubing which served first as a catholyte fill port and was then closed and used as the cathode electrical lead from the cell. The tubular, upward extending portion of the anode tank extended through a KOVAR® insulating seal at the center of the casing top and functioned first as a sodium fill port and was then closed and used as the anode lead from the cell.

The fiber/cathode foil/spacer tape/mandrel and tubesheet assembly comprised about 2000 hollow glass fibers, 80 $\mu$m O.D.×50 $\mu$m I.D.×about 12,7 cm (5") long and a tubesheet disc about 0,5 cm (0,2") inch thick×about 2,43 cm (0,96") in diameter. The portion of the fiber (etc.) bundle below the tubesheet was about 1,58 cm (0,625") in diameter at the spacer tape level. Most of the space between the bundle and the casing wall was occupied by a 316 stainless steel sleeve which rested on the casing bottom but did not extend up far enough to touch the tubesheet. The cathode foil also did not extend as far as the tubesheet and (molten) catholyte was able to flow from the fill port between the casing wall and anolyte tank, past the tubesheet and into the spaces between the fibers within the bundle, when the cell was charged.

The amounts of catholyte (sulfur) and sodium charged to the cell were about 25 cc and 15 cc, respectively.

The compositions of the fiber and tubesheet glasses in mole ratio were $Na_2O:2B_2O_3:0.2$ $NaCl:0.16$ $SiO_2$ and 3.9 $Na_2O:92.9$ $B_2O_3:3.2$ $SiO_2$ respectively. The softening point of the tubesheet glass is much lower than that of the fiber glass but affords a good match thereto in thermal coefficients of expansion.

The fiber, foil, (etc.) bunder was formed around an aluminum tubing length (mandrel) by rolling up on it a length of 0,0013 cm (0.5 mil) thick×11,17 cm (4.4") wide aluminum foil on which was disposed a "ladder" of hollow fibers (spaced at 20 per cm) and a length of 0,013 cm (5 mil)×0,66 cm (0.26") wide aluminum spacing tape. The tubesheet material was applied at the nip of the developing roll and adjacent the open ends of the fibers, as a 90% by wt. solids-content slurry, in cumene, of a powder consisting of spherical particles about 40 $\mu$m in diameter and less regularly shaped, fine particles having effective diameters of about 5 $\mu$m. The resulting tubesheet/fiber (etc.) assembly was pre-dried overnight to remove most of the cumene, and heated in vacuo in such manner that the tubesheet was either fused (the prior art procedure) or sintered and then "broiled" (the present invention).

The majority of the "prior art" cells were made before a helium detector was obtained for leak testing. Prior to that time, a bubble counting device was used for this purpose. The latter device consists essentially of a pressurized nitrogen gas source, a pressure regulator and two vessels connected in series between the regulator and the cell (the anolyte fill port, conveniently) being tested. The first vessel, A, is relatively large, and acts as an essentially constant pressure reservoir and has a side arm which passed in sealing engagement through the wall of the second (smaller) vessel, B, and terminates in a capillary tip which opens just below the surface of a small body of liquid (such as kerosene) at the bottom of B. Nitrogen is charged through a valve to pre-purged vessels A and B (through A) until a preselected pressure (34,45×10³ Pa; 5 psig) is attained therein. The valve is then closed. If any nitrogen passes out of B through the tubesheet/fiber assembly, it is replaced by a corresponding amount of nitrogen from A, which is seen as bubbles emerging from the capillary tip. Unless the leak is large, no significant change in the ΔP occurs during the short period of time required to determine the bubble rate.

The dimensions of the capillary are such that, as a ΔP of 34,45×10³ Pa (5 psig), twenty bubbles are formed per cc of nitrogen gas passed. Thus, a bubble rate of 1 bubble per minute (at 34,45×10³ Pa; 5 psig) is equivalent to 1/20 (0.05) cc of nitrogen per minute. This is about the rate attributable to a single broken fiber (or an equivalent leak through the tubesheet or along a tubesheet-fiber contact surface). The completed cells designated herein as "prior art" cells were considered acceptable if their observed leak rates were not greater than 0.5 bubble per minute (one $N_2$ bubble every two minutes); equivalent to about 0.4×10⁻² cc of helium per second, at a ΔP of 1 atmosphere (@ 25°C).

None of the "prior art" cells tested with the helium detector were "helium-tight" (passed less than 10⁻⁹ cc/sec of helium). Even those cells which were acceptable by the bubble rate criterion exhibited relatively short lifetimes (up to about 21 days maximum, when repeatedly subjected to deep charge/discharge cycles in a standard testing protocol).

Dramatic improvements in acceptance rates and operating lifetime resulted when the tubesheet curing procedure was modified according to the present invention. A high proportion (7 out of a total of about 10) tubesheet/fiber (etc.) assemblies were helium-tight as formed. Of these, about 50% survived the stressing inherent in the cell assembly procedure and gave helium-tight cells. The operating lifetimes of the latter cells ranged up to as high as 131 days, and post-mortem of the failed cells showed that failures were generally not due to anolyte/catholyte contact resulting from leaks.

## Claims

1. A tubesheet for use in a high-temperature hollow fiber battery cell characterized by a glass having the composition

$Na_2O$, from 1 to 6.1 mole percent;
$SiO_2$, from 2.5 to 7.5 mole percent; and
$B_2O_3$, from 86.5 to 96.5 mole percent.

2. The tubesheet of Claim 1 characterized in that said glass has the composition

$Na_2O$ 1.5—4.5 mole percent
$SiO_2$ 2.5—4.0 mole percent.
$B_2O_3$ 92—96 mole percent.

3. A tubesheet/hollow fiber assembly for use in a high temperature battery cell comprising a tubesheet with which a plurality of hollow fiber lengths passing therethrough are engaged, characterized in that
said tubesheet being composed of a glass having the following composition:

$Na_2O$, from 1 to 6.1 mole percent;
$SiO_2$, from 2.5 to 7.5 mole percent; and
$B_2O_3$, from 86.5 to 96.5 mole percent; and

said fibers being composed of a ceramic having the composition

$Na_2O$ 25—34 mole percent
$B_2O_3$ 50—66 mole percent
$SiO_2$ 0—11 mole percent
NaCl 0—6 mole percent;

said tubesheet is a unitary body of said glass and is sealingly engaged with said fibers.

4. The assembly of Claim 3 characterized in that said fibers have a distortion temperature higher than the fusion temperature of said glass, a thermal coefficient of expansion which—within the range from 25°C up to its transition temperature—does not differ from that of said glass by more than $10 \times 10^{-7}$ units/°C, and is capable of sealingly bonding with said glass at said fusion temperature without being fluxed by the glass to such an extent that the flex strength of said fibers is reduced by more than 50 percent.

5. The assembly of Claim 4 characterized in that said fibers have a distortion temperature of at least 340°C, a coefficient of thermal expansion within the range of from 100 to $130 \times 10^{-7}$ units/°C and an electrical conductivity of at least $5 \times 10^5$ ohm cm at a temperature within the range of from 280°C to 325°C.

6. The assembly of Claim 3, 4 or 5 characterized in that the glass of the tubesheet has the composition

$Na_2O$ 1.5—4.5 mole percent
$B_2O_3$ 92—96 mole percent
$SiO_2$ 2.5—4.0 mole percent.

7. A helium-tight tubesheet/fiber assembly for use in an alkali metal/chalcogen battery cell, said assembly comprising a ceramic tubesheet which has first and second opposed faces characterized in that said tubesheet comprises a glass having the following composition

$Na_2O$ from 1 to 6.1 mole percent;
$SiO_2$, from 2.5 to 7.5 mole percent; and
$B_2O_3$ from 86.5 to 96.5 mole percent;

a plurality of inorganic hollow fibers extending through the tubesheet and having closed-ended sections extending from said first face and open ends terminating in or beyond said second face,

the portion of said tubesheet subjacent to and defining said second face being non-porous and sealingly engaged with the fibers,

the remainder of the tubesheet being contiguous with said portion but not itself sealingly engaged with the fibers, and consisting essentially of sintered particles having the same chemical composition as said portion.

8. The assembly of Claim 7 characterized in that the coefficient of thermal expansion of said ceramic tubesheet differs from the coefficient for the fiber material by not more than $20 \times 10^{-7}$ /°C.

9. The assembly of Claim 7 or 8 characterized in that said fibers are formed of a ceramic having the composition

$Na_2O$ 25—34 mole percent
$B_2O_3$ 50—66 mole percent
$SiO_2$ 0—11 mole percent
NaCl 0—6 mole percent.

10. A process for making the tubesheet/-hollow fiber assembly of Claim 8 comprising the steps of (a) providing a self-supporting, sintered, ceramic particle mass which has two opposed surfaces and which is pierced by and adhered to a plurality of inorganic hollow fibers, the closed-ended sections of said fibers extending from one of said surfaces and the open ends of said fibers terminate in or beyond said other surface, characterized in that the particles constituting said mass are selected from a material which (1) has a coefficient of thermal expansion not differing from the coefficient for the fiber material by more than $20 \times 10^{-7}$ per °C; (2) is fusible at a temperature below the softening point of the fibers, to a melt capable of bonding with them, and (3) has a sufficiently low thermal conductivity so that the portion of said mass subjacent to and defining said other surface can be locally heated to said temperature and melted without causing the rest of said mass to lose its sintered, particulate structure, (b) heating to said temperature said portion of the mass, and (c) cooling the so-heated mass to solidify the resulting layer of molten ceramic.

11. The process of Claim 10 characterized in that said sintered particle mass is provided by (1) slurrying the said ceramic particles with a volatile organic solvent to form a paste capable of maintaining the shape of a disc when formed as such, (2) disposing said slurry as a disc-shaped body of paste, pierced by said fibers, (3) evaporating said solvent from said body, and (4) heating the solvent-depleted body at a temperature below the softening point of said fibers for a period of time such that said particles are converted to said sintered particle mass.

12. The process of Claim 10 or 11 characterized in that the portion of said mass subjacent to and defining said second surface is melted by heat radiated directly to it from a graphite disc heated to redness.

**Patentansprüche**

1. Rohrwand zum Gebrauch in einer Hochtemperaturhohlfaserbatteriezelle, gekennzeichnet durch ein Glas mit der folgenden Zusammensetzung:

$Na_2O$ 1 bis 6,1 Mol-%;
$SiO_2$ 2,5 bis 7,5 Mol-% und
$B_2O_3$ 86,5 bis 96,5 Mol-%.

2. Rohrwand nach Anspruch 1, dadurch gekennzeichnet, daß das Glas die Zusammensetzung:

$Na_2O$ 1,5 bis 4,5 Mol-%,
$SiO_2$ 2,5 bis 4,0 Mol-% und
$B_2O_3$ 92 bis 96 Mol-% hat.

3. Rohrwand/Hohlfasereinsatz zum Gebrauch in einer Hochtemperaturbatteriezelle, bestehend aus einer Rohrwand, in die eine Vielzahl von Hohlfasern eingelassen ist, die der Länge nach durchgehen, dadurch gekennzeichnet, daß die Rohrwand zusammengesetzt ist aus einem Glas mit der folgenden Zusammensetzung:

$Na_2O$ 1 bis 6,1 Mol-%,
$SiO_2$ 2,5 bis 7,5 Mol-% und
$B_2O_3$ 86,5 bis 96,5 Mol-%

und daß diese Fasern zusammengesetzt aus Keramik mit der folgenden Zusammensetzung:

$Na_2O$ 25 bis 34 Mol-%,
$B_2O_3$ 50 bis 66 Mol-%,
$SiO_2$ 0 bis 11 Mol-% und
$NaCl$ 0 bis 6 Mol-%;

wobei die Rohrwand ein einheitlicher Körper aus dem Glas ist und dicht mit den Fasern verbunden ist.

4. Einsatz nach Anspruch 3, dadurch gekennzeichnet, daß die Fasern eine Verformungstemperatur haben, die höher ist als die Schmelztemperatur des Glases, einen Ausdehnungskoeffizient der—im Bereich von 25°C bis zur Übergangstemperatur—von dem des Glases sich nicht mehr als $10 \times 10^{-7}$ Einheiten/°C unterscheidet und fähig dazu ist, sich mit dem Glas bei der Schmelztemperatur dicht zu verbinden, ohne von dem Glas so geschmolzen zu werden, daß die Biegefestigkeit der Fasern um mehr als 50% reduziert wird.

5. Einsatz nach Anspruch 4, dadurch gekennzeichnet, daß die Fasern eine Verformungstemperatur von mindestens 340°C, einen Koeffizienten der Wärmeexpansion im Bereich von 100 bis $130 \times 10^{-7}$ Einheiten/°C und eine elektrische Konduktivität von mindestens $5 \times 10^5$/Ohm.cm bei einer Temperatur im Bereich von 280°C bis 325°C haben.

6. Einsatz nach einem der Ansprüche 3, 4 oder 5, dadurch gekennzeichnet, daß das Glas der Rohrwand die Zusammensetzung

$Na_2O$ 1,5 bis 4,5 Mol-%,
$SiO_2$ 2,5 bis 4,0 Mol-% und
$B_2O_3$ 92 bis 96 Mol-% hat.

7. Heliumdichter Rohrwand-Fasereinsatz zum Gebrauch in einer Alkalimetall/Sauerstoffbatteriezelle, bestehend aus einer keramischen Rohrwand, die erste und zweite gegenüberliegende Oberflächen hat, dadurch gekennzeichnet, daß die Rohrwand aus einem Glas mit der Zusammensetzung

$Na_2O$ 1 bis 6,1 Mol-%,
$SiO_2$ 2,5 bis 7,5 Mol-% und
$B_2O_3$ 86,5 bis 96,5 Mol-%

besteht und daß eine Vielzahl von anorganischen Hohlfasern sich durch die Rohrwand erstreckt und geschlossen endende Sektionen, die sich von der ersten Oberfläche aus erstrecken, und offene Enden, die in oder neben den zweiten Oberflächen enden, haben, wobei der Anteil der Rohrwand, der unterhalb der zweiten Oberfläche liegt und diese begrenzt, nicht porös ist und dicht mit den Fasern verbunden ist und der Rest der Rohrwand mit diesem Anteil benachbart ist, aber nicht selbst dicht mit den Fasern verbunden ist und hauptsächlich aus gesinterten Teilchen mit derselben chemischen Zusammensetzung wie jener Anteil besteht.

8. Einsatz nach Anspruch 7, dadurch gekennzeichnet, daß der Koeffizient der Wärmeexpansion der keramischen Rohrwand von dem Koeffizienten des Fasermaterials um nicht mehr als $20 \times 10^{-7}$ Einheiten/°C differiert.

9. Einsatz nach einem der Ansprüche 7 oder 8, dadurch gekennzeichnet, daß die Fasern aus einer Keramik geformt sind mit der Zusammensetzung

$Na_2O$ 25 bis 34 Mol-%,
$B_2O_3$ 50 bis 66 Mol-%,
$SiO_2$ 0 bis 11 Mol-% und
$NaCl$ 0 bis 6 Mol-%.

10. Verfahren zur Herstellung des Rohrwand/Hohlfassereinsatzes nach Anspruch 8, umfassent die Schritte (a) Herstellen einer selbsttragenden, gesinterten, keramischen Teilchenmasse, die zwei gegenüberliegende Oberflächen hat und die durchbrochen ist mit und fest haftet an einer Vielzahl von anorganischen Hohlfasern, wobei die geschlossen endenden Sektionen dieser Fasern sich von einer der Oberflächen erstrecken und die offenen Enden der Fasern in oder neben der anderen Oberfläche enden, dadurch gekennzeichnet, daß die Teilchen, die die Masse bilden, ausgewählt sind aus einem Material, das (1) einen Koeffizienten der Wärmeexpansion hat, der von dem Koeffizienten für das Fasermaterial nicht mehr als $20 \times 10^{-7}$ pro °C differiert; (2) schmelzbar ist bei einer Temperatur unterhalb des Erweichungspunktes der Fasern zu einer Schmelze, die fähig ist, mit diesen sich zu verbinden und (3) eine genügend niedrige thermische Konduktivität hat, sodaß der Anteil der Masse, der unterhalb der anderen Oberfläche liegt und diese begrenzt, lokal auf die Temperatur erhitzt werden kann und geschmolzen werden kann, ohne daß der Rest der Masse seine gesinterte teilchenförmige Struktur verliert, (b) Erhitzen auf die Temperatur des Anteils der Masse und (c) abkühlen der so erhitzten Masse, um die resultierende Schicht von geschmolzener Keramik zu erstarren.

11. Verfahren nach Anspruch 10, dadurch gekennzeichnet, daß die gesinterte Teilchenmasse hergestellt wird durch (1) Aufschlämmen der Keramikteilchen mit einem flüchtigen organischen Lösungsmittel, zur Bildung einer Paste, die die Form einer Scheibe aufrechterhalten kann, wenn sie als solche geformt wird, (2) Anordnen der Aufschlämmung als einen scheibenförmigen Körper der Paste, der durchzogen wird von Fasern, (3) Abziehen des Lösungsmittels von diesem Körper und (4) Erhitzen des lösungsmittelfreien Körpers auf eine Temperatur unterhalb des Erweichungspunktes der Fasern für eine Zeitspanne, in der die Teilchen zu der gesinterten Partikelmasse umgewandelt werden.

12. Verfahren nach Anspruch 10 oder 11, dadurch gekennzeichnet, daß der Anteil der Masse, der unterhalb der zweiten Oberfläche liegt und diese begrenzt, geschmolzen wird durch Hitze, die direkt darauf gestrahlt wird von einer Graphitscheibe, die zur Rotglut erhitzt wurde.

**Revendications**

1. Manchon destiné à être utilisé dans une cellule de batterie à fibres creuses fonctionnant à haute température, caractérisé par un verre ayant pour composition:

Na$_2$O, de 1 à 6,1% en moles;
SiO$_2$, de 2,5 à 7,5- en moles; et
B$_2$O$_3$, de 86,5 à 96,5% en moles.

2. Manchon selon la revendication 1, caractérisé par le fait que ledit verre a pour composition:

Na$_2$O, 1,5—4,5% en moles
SiO$_2$, 2,5—4,0% en moles; et
B$_2$O$_3$, 92—96% en moles.

3. Assemblage manchon/fibres creuses destiné à être utilisé dans une cellule de batterie fonctionnant à haute température, comprenant un manchon avec lequel est engagé une pluralité de longueurs de fibres creuses le traversant, caractérisé par la fait que ledit manchon se compose d'un verre ayant la composition suivante:

Na$_2$O, de 1 à 6,1% en moles;
SiO$_2$, de 2,5 à 7,5% en moles; et
B$_2$O$_3$, de 86,5 à 96,5% en moles;

lesdites fibres étant composées d'une céramique ayant la composition:

Na$_2$O, 25—34% en moles;
B$_2$O$_3$, 50—66% en moles;
SiO$_2$, 0—11% en moles; et
NaCl, 0—6% en moles;

ledit manchon est un corps unitaire dudit verre et il est en engagement étanche avec lesdites fibres.

4. Assemblage selon la revendication 3 caractérisé par le fait que lesdites fibres ont une température de déformation supérieure à la température de fusion dudit verre, un coefficient de dilatation thermique qui, dans la gamme de 25°C jusqu'à sa température de transition, ne diffère pas de celui dudit verre de plus de 10×10$^{-7}$ unités/°C, et est capable de se joindre de façon étanche audit verre à ladite température de fusion sans être agressé par ledit verre au point que la résistance à la flexion desdites fibres soit réduite de plus de 50%.

5. Assemblage selon la revendication 4, caractérisé par le fait que lesdites fibres ont une température de déformation d'au moins 340°C, un coefficient de dilatation thermique se situant dans la gamme de 100 à 130×10$^{-7}$ unités/°C et une conductivité électrique d'au moins 5×10$^5$ (ohm×cm)$^{-1}$ à une température se situant dans la gamme de 280°C à 325°C.

6. Assemblage selon l'une des revendications 3, 4 ou 5, caractérisé par le fait que le verre du manchon a la composition:

Na$_2$O, 1,5—4,5% en moles
B$_2$O$_3$, 92—96% en moles
SiO$_2$, 2,5—4,0% en moles

7. Assemblage manchon/fibres étanche à l'hélium destiné à être utilisé dans une cellule de batterie métal alcalin/chalcogène, ledit assemblage comprenant un manchon en céramique qui présente des première et seconde faces opposées, caractérisé par le fait que ledit manchon comprend un verre ayant la composition suivante:

Na$_2$O, de 1 à 6,1% en moles;
SiO$_2$, de 2,5 à 7,5% en moles; et
B$_2$O$_3$, de 86,5 à 96,5% en moles;

une pluralité de fibres creuses inorganiques s'étendant à travers le manchon et ayant des sections à extrémité fermée qui s'étendent à partir de ladite première face et des extrémités ouvertes qui se terminent dans ou au-delà de ladite seconde face,

la partie dudit manchon sousjacente à ladite seconde face et définissant ladite seconde face étant non poreuse et en engagement étanche avec les fibres,

le restant du manchon étant contigu à ladite partie, mais n'étant pas lui-même en engagement étanche avec les fibres, et consistant essentiellement en particules frittées ayant la même composition chimique que ladite partie.

8. Assemblage selon la revendication 7, caractérisé par le fait que le coefficient de dilatation thermique dudit manchon en céramique diffère do coefficient du matériau des fibres de pas plus de $20 \times 10^{-7}/°C$.

9. Asemblage selon l'une des revendications 7 ou 8, caractérisé par le fait que lesdites fibres sont formées en une céramique ayant pour composition:

Na₂O, de 25—34% en moles; $Na_2O$, de 25—34% en moles; B₂O₃, de 50—66% en moles; $B_2O_3$, de 50—66% en moles; SiO₂, de 0—11% en moles; et $SiO_2$, de 0—11% en moles; et NaCl, de 0—6% en moles.

10. Procédé de fabrication de l'ensemble manchon/fibres creuses de la revendication 8, comprenant les étapes consistant à (a) former une masse de particules en céramique, frittée, se supportant par elle-même, qui présente deux surfaces opposées et qui est percée par une pluralité de fibres creuses inorganiques auxquelles elle adhère, les sections à extrémités fermées desdites fibres s'étendant à partir de l'une desdites surfaces et les extrémités ouvertes desdites fibres se terminant dans ou au-delà de ladite autre surface, caractérisé par le fait que les particules constituant ladite masse sont choisies dans un matériau qui (1) a un coefficient de dilatation thermique ne différant pas du coefficient pour le matériau des fibres de plus de $20 \times 10^{-7}/°C$; (2) est fusible à une température inférieure au point de ramollissement des fibres, en un produit fondu pouvant se joindre à elles, et (3) a une conductivité thermique suffisamment faible pour que la partie de ladite masse sousjacente à ladite seconde face et définissant ladite autre surface puisse être localement chauffée à ladite température et fondue sans forcer le reste de ladite masse à perdre sa structure particulaire, frittée, les étapes suivantes du procédé consistant à (b) chauffer à ladite température ladite partie de la masse, et (c) refroidir la masse ainsi chauffée pour solidifier la couche résultante de céramique fondue.

11. Procédé selon la revendication 10, caractérisé par le fait que ladite masse de particules frittée est formée (1) en mettant sous forme de bouillie lesdites particules de céramique avec un solvant organique volatil pour former une pâte capable de conserver la forme d'un disque quand elle est mise sous cette forme, (2) en disposant ladite bouillie sous forme d'un corps de pâte en forme de disque, percé par lesdites fibres, (3) en faisant évaporer ledit solvant dudit corps, et (4) en chauffant le corps exempt de solvant à une température inférieure au point de ramollissement desdites fibres pendant une période de temps telle que lesdites particules soient converties en ladite masse de particules frittée.

12. Procédé selon l'une des revendications 10 ou 11, caractérisé par le fait que la partie de ladite masse sousjacente à ladite seconde face et définissant ladite seconde surface est fondue par la chaleur qui lui est irradiée directement à partir d'un disque en graphite chauffé au rouge.

FIG 1